# EUROPEAN PATENT APPLICATION

(11) **EP 1 408 289 A2**
(43) Date of publication of application: **14.04.2004**
(21) Application number: 03016812.4
(22) Date of filing: 23.07.2003
(51) Int. Cl.: F24F 11/00, H04M 7/00

(54) **Air conditioner control system using public switched telephone network and method for operating the same**

(30) Priority: 12.10.2002 KR 2002062270; 12.10.2002 KR 2002062271; 23.10.2002 KR 2002064946
(71) Applicant: LG Electronics, Inc., Seoul 150-010 (KR)
(72) Inventor: Yoon, Sang Chul, Ilsan-ku, Koyang-si 411-370, Kyungki-do (KR); Jeon, Duck Gu, Seongdong-ku, 133-070 Seoul (KR); Jung, Jae Sik, 142-108 Seoul (KR); Kwon, Jae Hwan, Yeoungdungpo-ku, 150-754 Seoul (KR)
(74) Representative: Urner, Peter, Dipl.-Phys.

(57) **Abstract**

An air conditioner control system using a PSTN (Public Switched Telephone Network) and a method for operating the same. The system and method enable a remote control operator to partially or entirely control a plurality of air conditioners through the PSTN by connecting receiver modules to the air conditioners having assigned unique IDs (Identities) and classifying the air conditioners commonly using the same telephone line. In an electronic device, a control program is driven to control and monitor the air conditioners. A transmitting module connected to the electronic device in serial converts and codes a control command signal into a DTMF (Dual Tone Multi-Frequency) signal and transmits the DTMF signal to a receiving module connected to a corresponding air conditioner through the PSTN such that the air conditioner can be remotely controlled. Since the air conditioners within a large-sized building can be partially or entirely controlled, convenience and efficiency of remote control can be improved and time, manpower and cost for controlling and managing the air conditioners can be saved.

## Description

### BACKGROUND OF THE INVENTION

### Field of the Invention

The present invention relates to an air conditioner control system using a PSTN (Public Switched Telephone Network) and a method for operating the same, and more particularly to an air conditioner control system using a PSTN and a method for operating the same, which enable a remote control operator to partially or entirely control a plurality of air conditioners through the PSTN by connecting receiver modules having set and inputted unique IDs (Identities) to the air conditioners and classifying the air conditioners commonly using the same telephone line.

### Description of the Related Art

Conventionally, an air conditioner is configured by an indoor device and an outdoor device. A coolant circulated in the indoor and outdoor devices forms a thermal cycle of compression, condensation, expansion and evaporation, and performs indoor air conditioning while performing a cooling or heating operation. Where the efficient central management of the cooling/heating operation is required in a large-sized building or school, etc., the air conditioner configured by the indoor and outdoor devices has been installed at each room within the building. Moreover, as the air conditioner is installed at each room of a general home, its manager must move to the room to input a control command into the air conditioner and identify a control state of the air conditioner.

A multi-air conditioner system is recently installed to perform indoor air conditioning such that installation and maintenance costs of a plurality of air conditioners can be saved. The multi-air conditioner system includes a plurality of indoor devices installed in respective rooms and a single outdoor device for sensing operating states of the indoor devices and controlling circulations of coolants supplied to the indoor devices. It is a trend that such a multi-air conditioner system is supplied to a large-sized building. Of course, where the above-described multi-air conditioner system is not installed, the conventional air conditioner configured by the indoor device and the outdoor device can be independently installed at each room to perform air conditioning.

In a recently developed home network system, a plurality of home appliances are connected to a network constructed in a home and the network is connected to a server appliance having data processing capability, which controls the home appliances. All home appliances connected to the network can be controlled in a central control manner. The server appliance is connected to an external Internet network. A remote control operator for controlling the home appliances within the home at a remote site accesses the server appliance through the Internet network. The remote control operator can input a control command and identify an operating state.

In order for the home network system to be appropriately constructed, very high-speed Internet networks must be regionally constructed and home networks must be constructed within homes or buildings. Home network systems are not applicable to large-sized buildings or apartments where supply of Internet networks is insufficient.

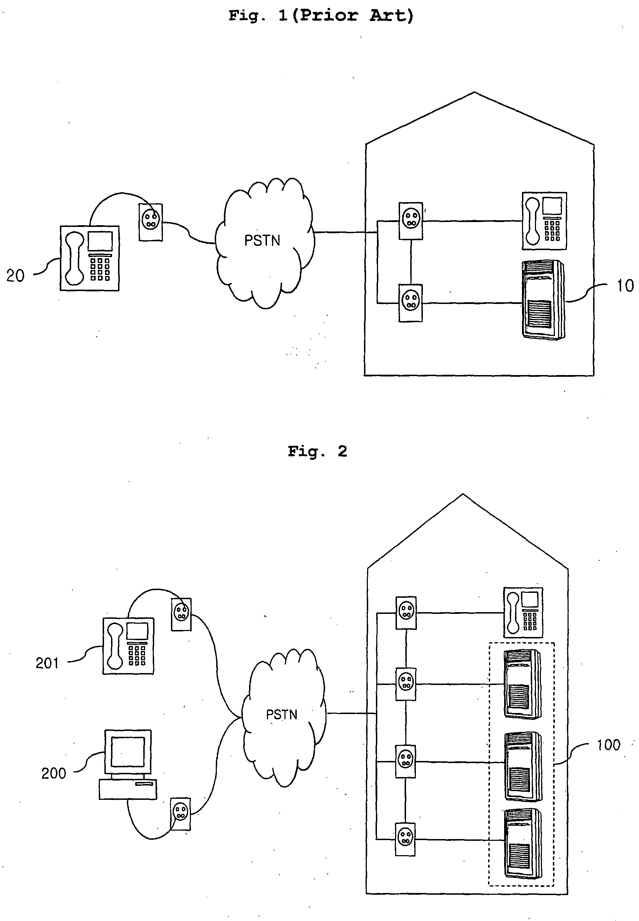

Fig. 1 is a view illustrating the configuration of a' conventional air conditioner control system using a PSTN (Public Switched Telephone Network). As shown in Fig. 1, the conventional air conditioner control system using the 'PSTN has been developed with ensuring low cost and stability such that the multi-air conditioner system or a plurality of air conditioners independently installed at all rooms can be controlled. As an air conditioner 10 is connected to a telephone terminal, the remote control operator sends a call signal to a building or home in which the air conditioner 10 is installed, manipulates numeric keys or buttons of a telephone 20, and inputs simple control commands such as an power on/off command, etc., so that the control command is sent to the air conditioner 10 through the PSTN and the air conditioner 10 can be remotely controlled.

However, in the conventional air conditioner control system using the PSTN, a controller allowing the remote control operator to input the control command is limited to the telephone 20. Because the control commands are classified by only a manipulation sequence of numeric keys or buttons, the control commands are simple. Accordingly, there is a problem in that a detailed control command cannot be inputted. Moreover, in the conventional air conditioner control system using the PSTN, only a single air conditioner can be controlled through a single telephone number. At this time, a plurality of air conditioners cannot be simultaneously controlled within a building using the single telephone number.

### SUMMARY OF THE INVENTION

Therefore, the present invention has been made in view of the above problems, and it is an object of the present invention to provide an air conditioner control system using a PSTN (Public Switched Telephone Network) and a method for operating the same, wherein the system and method can connect receiving modules connected to a plurality of air conditioners to a telephone terminal in order to partially or entirely control the air conditioners coupled to a single telephone number, simultaneously control the air conditioners at a remote site by selecting unique IDs assigned to the air conditioners, reduce time and cost for controlling and managing the air conditioners, and control various detailed functions of an air conditioner by manipulating an electronic device having an air conditioner control program embedded therein.

In accordance with one aspect of the present invention, the above and other objects can be accomplished by the provision of an air conditioner control system using a PSTN (Public Switched Telephone Network), comprising: an electronic device having a control program driven to control a plurality of air conditioners installed within a building; a transmitting module for converting and coding a control command signal inputted through the control program into a DTMF (Dual Tone Multi-Frequency) signal and transmitting the DTMF signal to the PSTN; and a receiving module for receiving the DTMF signal from the transmitting module and transmitting the DTMF signal to a corresponding air conditioner.

In accordance with another aspect of the present invention, there is provided an air conditioner control system using a PSTN (Public Switched Telephone Network), comprising: a plurality of air conditioners installed indoors to perform air conditioning; a telephone for generating a DTMF (Dual Tone Multi-Frequency) signal through a manipulation of a plurality of buttons or keys, and receiving control commands for the air conditioners; and a plurality of receiving modules each receiving the DTMF signal from the telephone through the PSTN and transmitting the DTMF signal to a corresponding air conditioner.

In accordance with yet another aspect of the present invention, there is provided a method for operating an air conditioner control system using a PSTN (Public Switched Telephone Network), comprising the steps of: (a) receiving a telephone number coupled to at least one air conditioner to be controlled and a control command signal through an electronic device or a telephone; (b) converting and coding the control command signal inputted at the step (a) into a DTMF (Dual Tone Multi-Frequency) signal and transmitting the DTMF signal to a destination of the telephone number through the PSTN; (c) allowing a receiving module connected to the air conditioner to receive the DTMF signal transmitted at the step (b); (d) converting and decoding the DTMF signal received at the step (c) into a control command signal and transmitting the control command signal to the air conditioner; and (e) after a control operation of the air conditioner is carried out in response to the control command signal transmitted at the step (d), transmitting state data to the electronic device or the telephone.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a view illustrating the configuration of a conventional air conditioner control system using a PSTN (Public Switched Telephone Network);
Fig. 2 is a view illustrating the configuration of an air conditioner control system using the PSTN in accordance with the present invention;
Fig. 3 is a view illustrating a first embodiment of the configuration of an air conditioner control system using the PSTN in accordance with the present invention;
Fig. 4 is a view illustrating the structure of a control command signal applied to the air conditioner control system using the PSTN in accordance with the present invention;
Fig. 5 is a view illustrating a second embodiment of the configuration of the air conditioner control system using a PSTN in accordance with the present invention; and
Fig. 6 is a view illustrating a flow of signals in a method for operating the air conditioner control system using the PSTN in accordance with the present invention.

### DESCRIPTION OF THE PREFERRED EMBODIMENTS

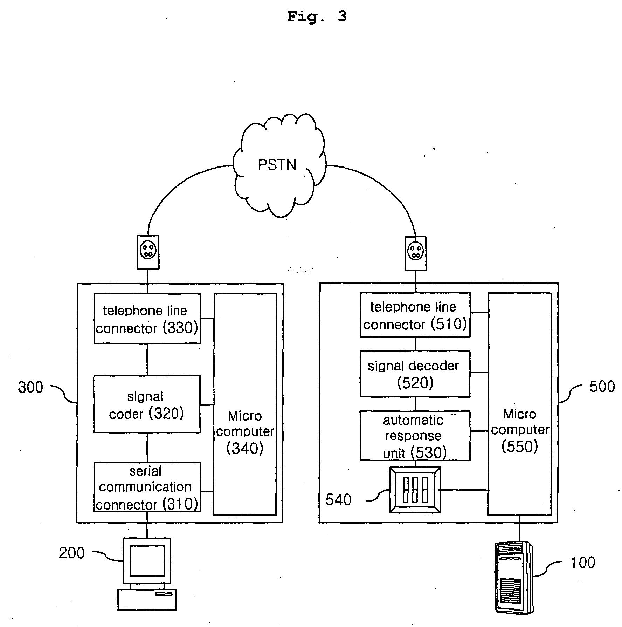

Fig. 2 is a view illustrating the configuration of an air conditioner control system using a PSTN (Public Switched Telephone Network) in accordance with the present invention; and Fig. 3 is a view illustrating a first embodiment of the configuration of an air conditioner control system using the PSTN in accordance with the present invention.

A plurality of air conditioners 100 installed indoors to perform air conditioning are commonly connected to a telephone line terminal at an installation site, i.e., commonly coupled to a single telephone number, on the basis of a connection network physically connected to the same telephone line. The telephone line terminal is connected to the PSTN.

Moreover, different unique IDs (Identities) are assigned to the air conditioners 100 connected to the same telephone line such that the air conditioners 100 can be identified. In this case, a DIP (Dual Inline Package) switch 540 is used. The DIP switch 540 is an environment setup switch for correctly operating a peripheral device such as a disk, printer or etc. As the different unique IDs are assigned to the air conditioners 100 by a manager, the manager calls the unique IDs and selects and manipulates the air conditioners where desiring to operate a specific air conditioner or all air conditioners at a remote site.

The PSTN is a telephone network for providing a voice and data communication service to a number of subscribers through a switching center as a conventional subscription telephone service. If a calling party (sender) dials and inputs a telephone number, a local switch switches the calling party's call to a destination corresponding to the telephone number such that the calling party can communicate with a called party.

An electronic device 200 externally outputs state data of the air conditioners and drives a control program for allowing a control command to be inputted. The electronic device 200 includes a built-in wired or wireless modem such that it can be connected to the PSTN. Thus, the electronic device 200 includes a key input unit (not shown) for receiving a control command through the control program and a screen display unit (not shown) for outputting or displaying the state data of the air conditioner operated in response to the control command.

Fig. 3 is a view illustrating a first embodiment of the configuration of an air conditioner control system using the PSTN in accordance with the present invention.

As shown in Fig. 3, an example of the electronic device 200 is a personal computer. A remote control operator installs the control program designed by a GUI (Graphic User Interface) for providing the convenience of manipulation in the personal computer in order to remotely control the air conditioners. Moreover, the remote control operator can identify, from the screen display unit, state data of an air conditioner operated according to a control command inputted through the personal computer.

The remote control operator manipulates the electronic device 200 to input a control command containing a telephone number coupled to at least one air conditioner to be, controlled, an ID assigned to the air conditioner and control information.

The control command inputted through the electronic device 200 is sent to a transmitting module 300 connected to a serial port of the electronic device 200. The transmitting module 300 is a kind of a modem for converting and coding the control command into a DTMF (Dual Tone Multi-Frequency) signal. A serial communication between the electronic device 200 and the transmitting module 300 conforms to an RS-232C standard

The DTMF signal is generated when a button or key of the telephone is pressed and transmitted to a central office. Each key pressed by a user generates dual-tone frequencies having specific frequencies including one tone of a high frequency and the other tone of a low frequency. It can be sensed which of keys arranged on the telephone is inputted, through the dual-tone frequencies.

The transmitting module 300 connected to the electronic device 200 in a serial communication manner includes a serial communication connector 310 for receiving a control command signal inputted from the electronic device 200; a signal coder for coding and converting the control command signal received by the serial communication connector 310 into a DTMF signal; a telephone line connector 330 connected to the PSTN for externally outputting the DTMF signal coded and converted by the signal coder 320; and a microcomputer 340 for controlling a flow of signals such that the control command signal received by the serial communication connector 310 can be transmitted through the PSTN.

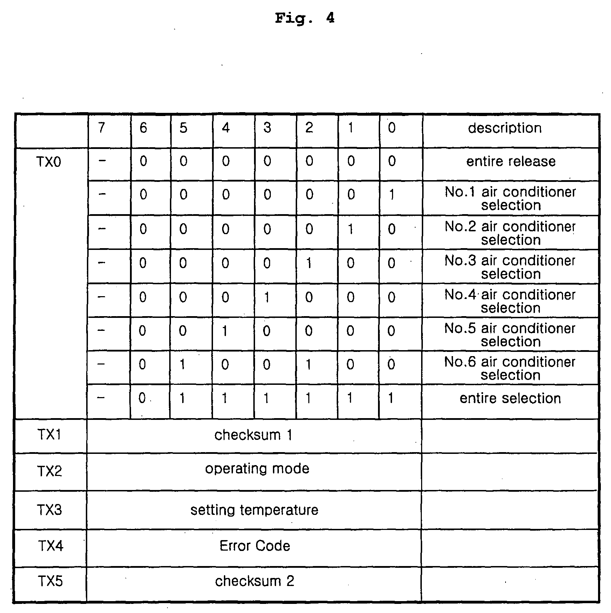

The control command signal transmitted from the microcomputer 340 of the transmitting module 300 consists of an 8-bit stream. The control command includes a packet TX0 indicating IDs of air conditioners to be controlled according to a combination of consecutively arranged bits and packets TX1 to TX5 indicating control information such as operating modes, setting temperatures, etc. associated with the air conditioners to be controlled. Fig. 4 is a view illustrating the structure of a control command signal applied to the air conditioner control system using the PSTN in accordance with the present invention.

The packet TX0 is provided such that the air conditioners can be partially or entirely selected according to the combination of arranged bits. In response to the packet TX0, the air conditioners at the operating states can be initialized to release all commands. The packet TX0 is based on a basic unit of 8 bits. A most significant bit of the 8 bits is a transmitter ID indicating whether a device transmitting the control command is the electronic device 200 or the telephone 201. Lower 7 bits are IDs of air conditioners to be controlled. The packets TX1 to TX5 include control information indicating operating modes, setting temperatures, etc. The packets TX1 to TX5 can further include intermediate checksum values.

The transmitting module 300 transmits a DTMF signal to the PSTN through the telephone line connector 330. The receiving module 500 of the air conditioner coupled to a corresponding telephone number receives the DTMF signal from the PSTN and transmits the received DTMF signal to a corresponding air conditioner 100.

The receiving module 500 is connected to each air conditioner 100 or embedded in each air conditioner 100. The receiving module 500 receives and transfers a signal from the PSTN. As the ID of each air conditioner is equally set and inputted into the DIP switch 540, the receiving module 500 receives a control command signal containing a unique ID set in the DIP switch 540.

The receiving module 500 connected to the PSTN through the telephone line connector 510 receives a DTMF signal from the transmitting module 300. In response to the DTMF signal, a signal decoder 520 converts and decodes the received DTMF signal into a control command signal such that an air conditioner can recognize the received DTMF signal.

The DIP switch 540 is attached to each air conditioner and assigns unique IDs to identify the air conditioners. If a unique ID contained in the control command signal received from the transmitting module 300 connected to the electronic device 200 matches an ID set and inputted in the DIP switch 540, the signal decoder 520 converts and decodes the received DTMF signal into the control command signal to transmit the control command signal to the air conditioner. In the receiving module 500, a microcomputer 550 outputs, to the electronic device 200 or the telephone 201, state data of the air conditioner operated according to the control command signal.

The receiving module 500 further includes an automatic response unit 530. The automatic response unit 530 converts the state data received from the air conditioner into a voice signal only where a transmitter for transmitting the control command signal is the telephone 201.

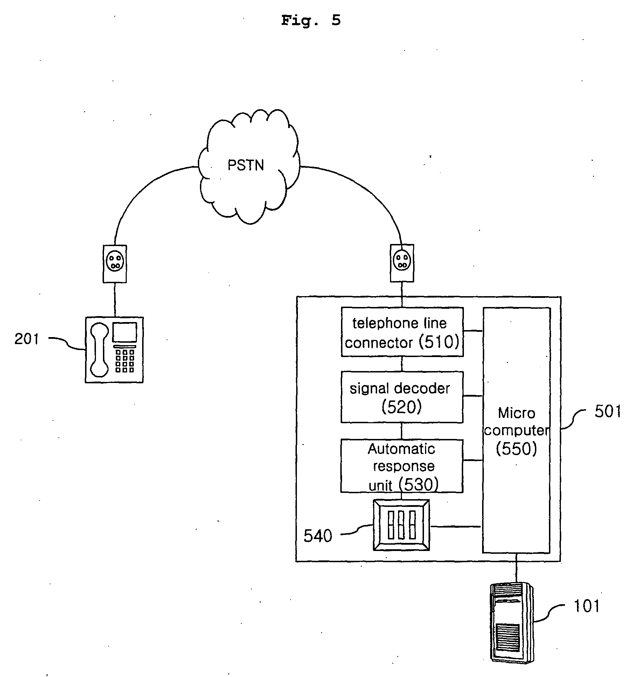

As described above, the first embodiment of Fig. 3 corresponds to the air conditioner control system including the electronic device 200, the transmitting module 300, the PSTN, the receiving module 500 and the air conditioners 100. Where the control command is inputted through the telephone 201 in place of the electronic device 200, the transmitting module 330 is unnecessary since the telephone 201 directly transmits a DTMF signal in response to the input of a telephone key. The second embodiment of the air conditioner control system using the PSTN in accordance with the present invention is shown in Fig. 5, which is a view illustrating a second embodiment of the configuration of the air conditioner control system using the PSTN in accordance with the present invention.

The air conditioner control system in accordance with the second embodiment includes a plurality of air conditioners 101 installed indoors to perform air conditioning; a telephone 201 for receiving a control command signal for the air conditioners when a plurality of buttons or keys are manipulated to generate a DTMF signal; and a receiving module 501 for receiving the DTMF signal transmitted by the telephone 201 through the PSTN. The receiving module 501 sends the DTMF signal to an air conditioner 101 such that the air conditioner 101 can operate in response to a control command signal. In response to state data of the air conditioner 101, an automatic response unit 530 converts the state data into a voice signal and then transmits the voice signal to the telephone 201, thereby allowing the remote control operator to easily identify a control state and a result of the control. The receiving module 501 in accordance with the second embodiment has the same configuration as the receiving module 500 in accordance with the first embodiment.

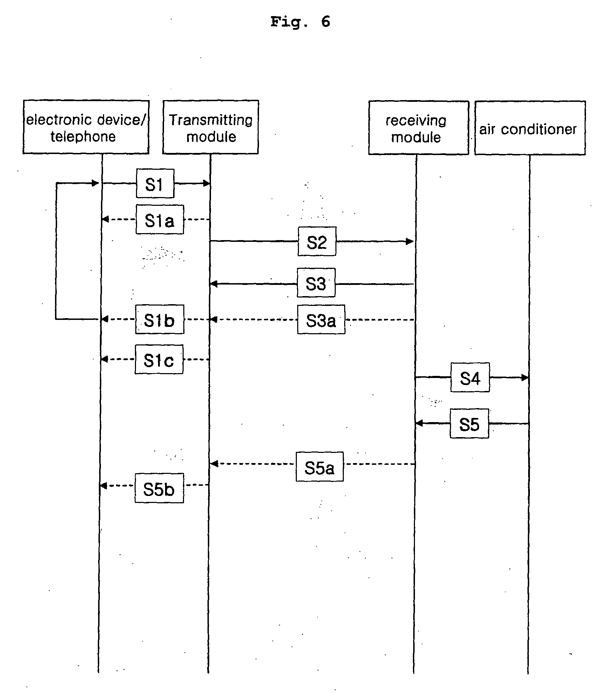

A method for operating the air conditioner control system using the PSTN in accordance with the present invention will be described with reference to Fig. 6.

At the first step, a telephone number coupled to air conditioners to be controlled and a control command signal are inputted through the electronic device or the telephone. If a transmitter of the control command signal is the electronic device, the transmitting module connected to the electronic device receives the control command\signal (S1).

If the control command signal is not completely received for a predetermined time, the transmitting module generates a time-out error after the predetermined time and then notifies the electronic device that the control command signal has not been received (S1a). Further, if an error is detected from the control command signal, the transmitting module notifies the electronic device that the error has been detected from the control command signal and requests the electronic device to retransmit the control command signal (S1b). On the other hand, if the control command signal has been successfully received without an error, the transmitting module notifies the electronic device that the control command signal has been successfully received (S1c).

After the control command signal inputted at the first step is converted and coded into a DTMF signal, the DTMF signal is transmitted to a destination of a telephone number coupled to an air conditioner to be controlled through the PSTN at the second step (S2). Where the DTMF signal is directly transmitted by the telephone as in the second embodiment such that the air conditioner can be remotely controlled, the second step can be omitted.

As the receiving module connected to the air conditioner receives the DTMF signal transmitted at the second step, the receiving module begins to operate a timer upon first receiving the DTMF signal. If the receiving module does not completely receive the DTMF signal for a predetermined time, the receiving module generates a time-out error and requests the transmitter to retransmit the control command signal at the third step (S3). The receiving module identifies a checksum at an intermediate time-point and a completion time-point when the DTMF signal is received and checks a transmission error (S3a).

The checksum is to check the accuracy of transmitted data. The transmitting module adds a sum of all data items contained in the control command signal to a tail of the control command signal. The receiving module sums up the data items one by one while receiving the control command signal and determines whether the sum of the received data items matches the sum contained in the tail of the control command signal.

After converting the DTMF signal received at the third step into the control command signal, the receiving module transmits the control command signal to the air conditioner at the fourth step (S4). At this time, the receiving module compares an ID of the air conditioner contained in the DTMF signal with an ID of the air conditioner assigned by the DIP switch. If the IDs are the same, the DTMF signal is converted and decoded into the control command signal and then the control command signal is transmitted to a main controller of a corresponding air conditioner.

At the fifth step, the air conditioner performs a control operation in response to the control command signal transmitted at the fourth step and then generates state data of the control operation to transmit the generated state data to the receiving module. At this time, if a transmitter ID contained in the control command signal corresponds to the electronic device, the receiving module transmits the state data to the electronic device. Otherwise, if a transmitter ID contained in the control command signal corresponds to the telephone, the receiving module converts the state data into voice data and then transmits the voice data to the telephone (S5).

After checking a transmission error and receiving the state data from the air conditioner, the receiving module transmits the state data to the electronic device or telephone (S5a).

As the transmitting module of the electronic device or telephone checks the transmission error and receives the state data from the receiving module, the telephone outputs the state data of the air conditioner by voice and the electronic device displays a screen such that the remote control operator can identify a control state and a result of the control (S5b).

As apparent from the above description, the present invention provides an air conditioner control system using a PSTN (Public Switched Telephone Network) and a method for operating the same, wherein the system and method connect a plurality of air conditioners commonly using the same telephone network to receiving modules having different ID (Identities), allow a receiving module to receive a control command signal of a remote control operator manipulating an electronic device or telephone and transmit the control command signal to an air conditioner, thereby remotely controlling various functions of the air conditioners, enabling the air conditioners to be easily managed and manipulated, and saving time, manpower and cost for managing the air conditioners for performing indoor air conditioning.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An air conditioner control system using a PSTN (Public Switched Telephone Network), comprising:
an electronic device having a control program driven to control a plurality of air conditioners installed within a building;
a transmitting module for converting and coding a control command signal inputted through the control program into a DTMF (Dual Tone Multi-Frequency) signal and transmitting the DTMF signal to the PSTN; and
a receiving module for receiving the DTMF signal from the transmitting module and transmitting the DTMF signal to a corresponding air conditioner.

2. The air conditioner control system as set forth in claim 1, wherein the electronic device comprises a screen display unit for displaying state data of the air conditioner, and
wherein the control program is implemented by a GUI (Graphic User Interface) and displayed on the screen display unit.

3. The air conditioner control system as set forth in claim 1, wherein the transmitting module comprises:
a serial communication connector for receiving the control command signal inputted into the electronic device in a serial communication manner;
a signal coder for converting and coding the control command signal received from the serial communication connector into the DTMF signal;
a telephone line connector connected to a telephone line for externally transmitting the DTMF signal converted and coded by the signal coder; and
a microcomputer for controlling a flow of signals such that the control command signal received by the serial communication connector is transmitted through the PSTN.

4. The air conditioner control system as set forth in claim 3, wherein the control command signal comprises:
a first packet including a unique ID assigned to at least one air conditioner to be controlled; and
second packets including control information such as an operating mode, a setting temperature, etc.

5. The air conditioner control system as set forth in claim 4, wherein the first packet further include a command for simultaneously selecting or releasing the air conditioners.

6. The air conditioner control system as set forth in claim 1, wherein the receiving module comprises:
a telephone line connector connected to the PSTN for receiving the DTMF signal from the transmitting module;
a signal decoder for converting and decoding the DTMF signal received from the telephone line connector into a control command signal such that the air conditioner can recognize the DTMF signal; and
a microcomputer for transmitting the control command signal converted and decoded by the signal decoder to the air conditioner and transmitting, to the telephone line connector, state data of the air conditioner operated according to the control command signal.

7. An air conditioner control system using a PSTN (Public Switched Telephone Network), comprising:
a plurality of air conditioners installed indoors to perform air conditioning;
a telephone for generating a DTMF (Dual Tone Multi-Frequency) signal through a manipulation of a plurality of buttons or keys, and receiving control commands for the air conditioners; and
a plurality of receiving modules each receiving the DTMF signal from the telephone through the PSTN and transmitting the DTMF signal to a corresponding air conditioner.

8. The air conditioner control system as set forth in claim 7, wherein the receiving module comprises:
a telephone line connector connected to the PSTN for receiving the DTMF signal from the telephone;
a signal decoder for converting and decoding the DTMF signal received from the telephone line connector into a control command signal such that the air conditioner can recognize the DTMF signal; and
a microcomputer for transmitting the control command signal converted and decoded by the signal decoder to the air conditioner and transmitting, to the telephone line connector, state data of the air conditioner operated according to the control command signal.

9. The air conditioner control system as set forth in claim 8, wherein the receiving module further comprises:
an automatic response unit for converting the state data of the air conditioner operated according to the control command signal into voice data and transmitting the voice data to the telephone line connector.

10. The air conditioner control system as set forth in claim 9, wherein the microcomputer performs a control operation such that the state data of the air conditioner is transferred to the automatic response unit, if a transmitting side of the control command signal is the telephone.

11. The air conditioner control system as set forth in claim 6 or 8, wherein the receiving module further comprises:
a DIP (Dual Inline Package) switch in which a unique ID assigned to the air conditioner is set and inputted.

12. The air conditioner control system as set forth in claim 11, wherein the microcomputer transmits the control command signal to the air conditioner if the unique ID assigned to the air conditioner is the same as that set and inputted in the DIP switch.

13. A method for operating an air conditioner control system using a PSTN (Public Switched Telephone Network), comprising the steps of:
(a) receiving a telephone number coupled to at least one air conditioner to be controlled and a control command signal through an electronic device or a telephone;
(b) converting and coding the control command signal inputted at the step (a) into a DTMF (Dual Tone Multi-Frequency) signal and transmitting the DTMF signal to a destination of the telephone number through the PSTN;
(c) allowing a receiving module connected to the air conditioner to receive the DTMF signal transmitted at the step (b);
(d) converting and decoding the DTMF signal received at the step (c) into a control command signal and transmitting the control command signal to the air conditioner; and
(e) after a control operation of the air conditioner is carried out in response to the control command signal transmitted at the step (d), transmitting state data to the electronic device or the telephone.

14. The method as set forth in claim 13, wherein the step (c) further comprises the steps of:
(c-1) operating a timer upon first receiving the DTMF signal, generating a time-out error if the DTMF signal is not completely received for a predetermined time, and sending a retransmission request; and
(c-2) identifying a checksum at an intermediate time-point and a completion time-point when the DTMF signal is received and checking a transmission error.

15. The method as set forth in claim 13, wherein the step (d) comprises the steps of:
(d-1) determining whether a unique ID (Identity) assigned to the air conditioner matches that of the air conditioner contained in the control command signal;
(d-2) if the two IDs match, converting and decoding the DTMF signal into a control command signal; and
(d-3) transmitting the control command signal to a corresponding air conditioner.

16. The method as set forth in claim 13, wherein the step (e) further comprises the steps of:
(e-1) allowing the air conditioner to carry out a control operation in response to the control command signal;
(e-2) allowing the air conditioner to generate state data of the air conditioner and transmit the generated state data to the receiving module;
(e-3) allowing the receiving module to check the transmission error, receive the state data and transmit the received state data to the electronic device or the telephone; and
(e-4) allowing the electronic device or the telephone to receive the state data and externally transmit the received state data.

17. The method as set forth in claim 16, wherein the step (c) further comprises the step of:
transmitting the state data to the electronic device if a transmitter ID contained in the control command signal corresponds to the electronic device and converting the state data into voice data to send the voice data to the telephone if the transmitter ID corresponds to the telephone.
